# EUROPÄISCHE PATENTSCHRIFT

(11) **EP 2 117 824 B1**
(45) Veröffentlichungstag und Bekanntmachung des Hinweises auf die Patenterteilung: **23.02.2011**
(21) Anmeldenummer: 08707743.4
(22) Anmeldetag: 15.02.2008
(51) Int. Cl.: B32B 3/02, B32B 3/06, B32B 21/02, B32B 21/06, E04F 15/02, E04F 13/08

(54) **VERKLEIDUNGSPANEEL**
TRIM PANEL
PANNEAU D'HABILLAGE

(30) Priorität: 16.02.2007 DE 102007007832
(43) Veröffentlichungstag der Anmeldung: 18.11.2009
(73) Patentinhaber: Interglarion Limited, 2404 Engomi, Nikosia (CY)
(72) Erfinder: RUHDORFER, Herbert, A-5020 Salzburg (AT)
(74) Vertreter: Herzog, Markus
(86) Internationale Anmeldenummer: PCT/EP2008/001182
(87) Internationale Veröffentlichungsnummer: WO 2008/098783

(56) Entgegenhaltungen:
- EP-A- 1 319 773
- WO-A-00/30845
- WO-A-00/37151
- DE-U1- 20 101 021
- US-A- 4 603 531

## Beschreibung

Die Erfindung betrifft ein Verkleidungspaneel, umfassend eine mit einem Dekor versehene Dekorseite, eine zur Anlage an einem Untergrund bestimmte Anlageseite, und eine aus einem Holzwerkstoff gefertigte Verbindungsschicht, mit welcher wenigstens ein Verbindungselement einer nach Art einer Nut-Feder-Verbindung ausgebildeten Verbindungsanordnung einstückig ausgebildet ist.

Derartige Verkleidungspaneele sind beispielsweise aus der EP 1 319 773 A2 bekannt. Im Wesentlichen das gesamte Volumen der bekannten Verkleidungspaneele ist aus dem Holzwerkstoff, beispielsweise MDF (**m**edium **d**ensity **f**iberboard) oder HDF (**h**igh **d**ensity **f**iberboard), gefertigt. Lediglich an seiner Sicht- bzw. Dekorseite ist ein Laminat vorgesehen, welches beispielsweise von einer Mehrzahl von mit Kunstharz getränkten Papierlagen gebildet ist, wobei die oberste, d.h. die dem Auge des Betrachters dargebotene, dieser Papierlagen mit einem Dekor bedruckt ist. Ferner kann auf der Anlageseite ein Gegenzugpapier vorgesehen sein.

Mit dem steigenden Umweltbewusstsein hat in der jüngeren Vergangenheit auch die Nachfrage nach regenerativen Energiequellen zugenommen. Dies hat unter anderem auch in privaten Haushalten zu einem Anstieg der Zahl von Pellet-Verbrennungsanlagen geführt. Da diese Pellets ebenfalls aus Holz hergestellt werden, war eine Abnahme der Verfügbarkeit von Holz auf dem Markt die Folge. Nicht zuletzt der damit verbundene Preisanstieg führte zu dem Wunsch, bei gegebener Dicke des gattungsgemäßen Verkleidungspaneels den Holzverbrauch pro Flächeneinheit des Verkleidungspaneels zu reduzieren.

Die WO 00/37151 A offenbart ein Verkleidungspaneel mit den Merkmalen des Oberbegriffs des Anspruchs 1, wobei das Verkleidungspaneel eine Bodenplatte für eine Bowlingbahn ist und eine mit einem Dekor versehene Dekorseite, eine zur Anlage an einem Untergrund bestimmte Anlageseite und eine eine Zellenstruktur aufweisende Zwischenschicht umfasst. Zur Herstellung einer durchgehenden Bodenfläche werden die bekannten Bodenplatten aneinandergefügt und auf einer Unterstruktur befestigt.

Aufgabe der vorliegenden Erfindung ist es, ein Verkleidungspaneel mit reduziertem Holzverbrauch pro Flächeneinheit bereitzustellen, welches gute mechanische Stabilität aufweist.

Erfindungsgemäß wird diese Aufgabe durch ein Verkleidungspaneel mit den Merkmalen des Anspruchs 1 gelöst.

Wie man leicht einsieht, wird der Holzverbrauch erfindungsgemäß dadurch reduziert, dass ein Teil des Volumens des Verkleidungspaneels von der wenigstens einen eine Zellstruktur aufweisenden Zwischenschicht eingenommen wird. Dabei umschließen die Wandungen der Zellenstruktur der wenigstens einen Zwischenschicht mit Gas, vorzugsweise Luft, gefüllte Volumina. Sollte es im Hinblick auf die Stabilität der wenigstens einen Zwischenschicht erforderlich sein, so können die Volumina der wenigstens einen Zwischenschicht aber auch zumindest teilweise mit einem stabilisierenden Medium gefüllt sein, beispielsweise einem geschäumten Medium.

In Weiterbildung der Erfindung wird vorgeschlagen, dass die Wandungen der Zellenstruktur zumindest teilweise aus einem nichtmetallischen, leichtgewichtigen Konstruktionswerkstoff gebildet sind. Dabei kann der Konstruktionswerkstoff beispielsweise Papier oder/und Karton oder/und Pappe sein, wobei sich diese Materialien hauptsächlich durch ihr Flächengewicht unterscheiden und man in Fachkreisen durchaus auch auf begriffliche Überschneidungen dieser Bezeichnungen trifft.

Ferner ist es möglich, dass der Konstruktionswerkstoff mit wenigstens einem thermoplastischen oder/und wenigstens einem duroplastischen Kunststoff imprägniert oder/und verstärkt ist, beispielsweise mit Polyolefin-Kunststoff.

Im Hinblick auf eine möglichst hohe Stabilität der wenigstens einen Zwischenschicht ist es ferner vorteilhaft, wenn die Wandungen der Zellstruktur im Wesentlichen orthogonal zur Paneelebene verlaufen.

In Weiterbildung der Erfindung wird ferner vorgeschlagen, dass wenigstens ein Teil der Zellen der Zellenstruktur in einem im Wesentlichen parallel zur Paneelebene genommenen Schnitt einen hexagonalen Querschnitt oder einen rechteckigen, beispielsweise quadratischen, Querschnitt oder einen dreieckigen Querschnitt aufweist.

An dieser Stelle sei darauf hingewiesen, dass die Verwendung derartiger Zellenstrukturen beispielsweise von Türblättern her an sich bekannt ist. Bei diesen Anwendungen ist die Zellenstrukturschicht jedoch an ihren orthogonal zur Türblatt- bzw. Paneelebene verlaufenden Rändern von einem massiven Rahmen umschlossen, der die Stabilität des Paneels gegenüber parallel zur Paneelebene verlaufenden Scherkräften sicherstellt und somit ein seitliches Wegknicken der Wandungen der Zellenstruktur verhindert. Im Gegensatz dazu liegt die wenigstens eine Zwischenschicht an den orthogonal zur Paneelebene verlaufenden Rändern des erfindungsgemäßen Verkleidungspaneels jedoch frei. Dies hat jedoch überraschenderweise keinen nachteiligen Einfluss auf die Stabilität der erfindungsgemäßen Verkleidungspaneele. Und auch in ästhetischer Hinsicht stellt dieses Freiliegen keinen Nachteil dar, da die Verkleidungspaneele mit aneinander angrenzenden Dekorseiten verlegt werden.

Die Verbindungsschicht des erfindungsgemäßen Verkleidungspaneels kann beispielsweise von einer MDF-Platte, einer HDF-Platte, einer Spanplatte, einer Tischlerplatte, einer Sperrholzplatte oder einer Kombinationsplatte gebildet sein, welche wenigstens eines der Materialien Span, MDF und HDF beinhaltet. Als Beispiel sei eine Kombinationsplatte aus Span mit Sperrholz genannt oder eine chemisch und thermisch nachgehärtete HDF-Platte.

Je nach dem beabsichtigten Einsatzgebiet kann auch die Dekorschicht von unterschiedlichen Materialien gebildet bzw. aus unterschiedlichen Materialien zusammengesetzt sein.

Die Dekorschicht kann beispielsweise eine Trägerschicht und eine mit der Trägerschicht verbundene Dekorlage umfassen. Die Dekorlage wird dabei üblicherweise auf der der Dekorseite zugewandten Fläche der Trägerschicht angeordnet sein.

Die Trägerschicht kann beispielsweise von einer HDF-Platte gebildet sein. Grundsätzlich ist jedoch auch der Einsatz anderer Materialien zur Ausbildung der Trägerschicht denkbar. Darüber hinaus kann die Dekorlage ein Laminat umfassen, welches beispielsweise aus einer Mehrzahl von mit Kunstharz getränkten Papierlagen gebildet ist.

In Weiterbildung der Erfindung wird vorgeschlagen, dass die Dekorseite der Dekorschicht von einer mit einem Dekor bedruckten Papierlage gebildet ist. Dabei kann diese Dekor-Papierlage eine Papierlage des vorstehend erwähnten Laminats sein. Ferner ist es möglich, auf der bedruckten Seite dieser Dekor-Papierlage ein sogenanntes Overlay-Papier anzuordnen, um die Verschleißfestigkeit des Dekors zu erhöhen. Derartige Overlay-Papiere sind üblicherweise ebenfalls mit Kunstharz getränkt und in diesem Zustand transparent, so dass sie den Blick auf das Dekor nicht behindern.

In Weiterbildung der Erfindung kann ferner vorgesehen sein, dass die Dekorschicht zumindest auf ihrer Dekorseite ein Furnier umfasst. Dabei kann dieses Furnier zum einen lediglich die Dekorlage der Dekorschicht bilden, die auf einer Trägerschicht der Dekorschicht angeordnet ist. Es ist jedoch auch möglich, dass das Furnier die gesamte Dekorschicht bildet. Zudem kann auch das Furnier zur Erhöhung der Verschleißfestigkeit mit einem Overlay-Papier überdeckt sein.

Auch hinsichtlich der Anlageschicht können je nach Einsatzgebiet unterschiedliche Ausgestaltungsvarianten in Betracht gezogen werden. Beispielsweise kann die Anlageschicht eine HDF-Platte oder ein Dünnlaminat umfassen. Im Falle des Einsatzes des erfindungsgemäßen Verkleidungspaneels als Fußbodenpaneel kann die Anlageschicht ferner eine Trittschallfolie umfassen. Zudem kann es im Hinblick auf die Formstabilität des Verkleidungspaneels, insbesondere zur Vermeidung eines Aufwölbens oder Schüsselns des Paneels vorteilhaft sein, wenn die Anlageseite der Anlageschicht von einer Gegenzugpapierlage gebildet ist.

Es sei an dieser Stelle darauf hingewiesen, dass die nach Art einer Nut-Feder-Verbindung ausgebildete Verbindungsanordnung eine Verbindung benachbarter Verkleidungspaneele durch eine im Wesentlichen planare Relativverschiebung der beiden benachbarten Paneele im Wesentlichen in der Paneelebene oder/und durch Ineinanderschwenken der Verbindungselemente der beiden benachbarten Paneele um eine zur Paneelebene im Wesentlichen parallel verlaufende Ebene bewerkstelligt werden kann, wie dies an sich aus der EP 1 024 234 A1 bekannt ist. Ferner ist es möglich, dass die Verkleidungspaneele ausschließlich mit Verbindungsnuten ausgebildet sind und dass zum Verbinden benachbarter Paneele zusätzlich Doppelfederelemente vorgesehen werden müssen, wie dies beispielsweise aus der EP 1 319 773 A2 bekannt ist.

Die Verkleidungspaneele können sowohl für die Wand-Decken- oder Fußbodenverkleidung verwendet werden, wobei ihre orthogonal zur Paneelebene gemessene Schichtdicke zwischen etwa 3 mm und etwa 40 mm betragen kann.

Die Erfindung wird im Folgenden an Ausführungsbeispielen anhand der beigefügten Zeichungen näher erläutert werden. Es stellt dar:
- Fig. 1: eine Querschnittsansicht eines konkreten Ausführungsbeispiels eines erfindungsgemäßen Verkleidungspaneels; und
- Fig. 2 - 4: Querschnittsdarstellungen analog Fig. 1 zur Erläuterung des grundlegenden Aufbaus verschiedener Varianten der erfindungs- gemäßen Verkleidungspaneele.

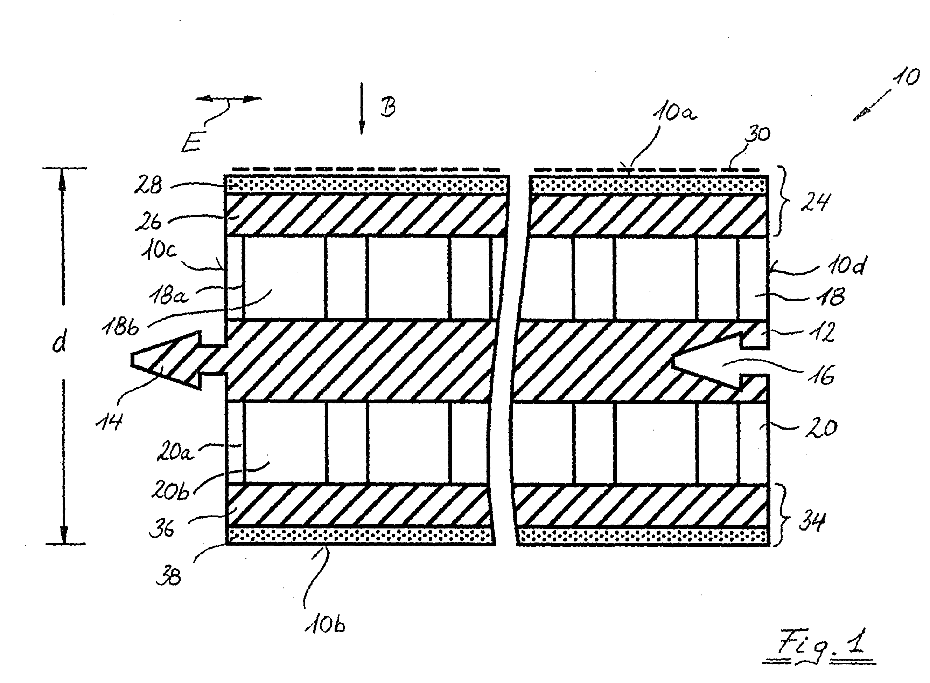

In Fig. 1 ist ein erfindungsgemäßes Verkleidungspaneel ganz allgemein mit 10 bezeichnet. Es umfasst eine Dekorseite 10a und eine zur Anlage an einem nicht dargestellten Untergrund bestimmte Anlageseite 10b. Die Dekorseite 10a und die Anlageseite 10b verlaufen im Wesentlichen parallel zur Paneelebene E. Darüber hinaus ist das Paneel 10 von im Wesentlichen orthogonal zur Paneelebene E verlaufenden Seitenrändern begrenzt, von denen in Fig. 1 lediglich die Ränder 10c und 10d dargestellt sind.

Das Paneel 10 umfasst eine Verbindungsschicht 12, mit welcher an der Seitenfläche 10c des Paneels 10 eine Verbindungsfeder 14 einstückig ausgebildet ist und mit welcher an der Seitenfläche 10d eine Verbindungsnut 16 einstückig ausgebildet ist. Festzuhalten ist, dass auch an den in Fig. 1 nicht dargestellten Seitenrändern des Paneels 10 entsprechende Verbindungselemente vorgesehen sein können.

In dem Ausführungsbeispiel gemäß Fig. 1 ist sowohl auf der der Dekorseite 10a zugewandten Seite der Verbindungschicht 12 als auch an der Anlageseite 10b zugewandten Seite der Verbindungsschicht 12 jeweils eine Zwischenschicht 18 bzw. 20 angeordnet, welche eine Zellenstruktur aufweist. Die Wandungen 18a bzw. 20a dieser Zellenstruktur verlaufen vorzugsweise im Wesentlichen orthogonal zur Paneelebene E und weisen in Blickrichtung B beispielsweise eine wabenförmige Anordnung auf. Ferner können die Wandungen 18a und 20a beispielsweise aus Karton gebildet sein, der mit einem thermoplastischen oder duroplastischen Kunststoff imprägniert ist, um für die erforderliche Stabilität der Zwischenschicht 18 bzw. 20 zu sorgen. Die Leerräume 18b bzw. 20b sind vorzugsweise mit Luft gefüllt.

Auf der der Dekorseite 10a zugewandten Seite der Zwischenschicht 18 schließt sich an diese eine Dekorschicht 24 an, die in dem dargestellten Ausführungsbeispiel eine Trägerschicht 26 und eine Dekorlage 28 umfasst. Die Trägerschicht 26 kann beispielsweise eine HDF-Platte sein, während die Dekorlage 28 von einem Laminat aus mit Kunstharz getränkten Papierlagen sein kann, deren oberste, d.h. der Dekorseite 10a nächstgelegene, mit einem gewünschten Dekor bedruckt ist. Wie dies an sich bekannt ist, kann die Dekorlage 28 zudem von einer Overlay-Papierlage 30 überdeckt sein. Alternativ ist es jedoch auch möglich, dass die Dekorlage 28 oder gar die gesamte Dekorschicht 24 von einem Furnier gebildet ist, welches optional ebenfalls von einer Overlay-Papierlage 30 überdeckt sein kann.

In entsprechender Weise ist auch auf der der Anlageseite 10b zugewandten Seite der Zwischenschicht 20 eine Anlageschicht 34 vorgesehen, die in dem dargestellten Ausführungsbeispiel eine Trägerschicht 36 und ein Gegenzugpapier 38 umfasst. Es ist jedoch auch möglich, die Anlageschicht 34 als Dünnlaminat auszubilden oder zusätzlich oder alternativ zu der Trägerschicht oder/und der Gegenzugpapierlage 38 eine Trittschallfolie vorzusehen.

Die Verbindungsschicht 12 und die beiden Zwischenschichten 18 und 20 können beispielsweise jeweils eine Dicke von etwa 2 mm aufweisen, während die Dekorschicht 24 und die Anlageschicht 34 eine Dicke von etwa 1 mm aufweisen, so dass sich insgesamt eine orthogonal zur Paneelebene E gemessene Paneeldicke d von etwa 8 mm ergibt.

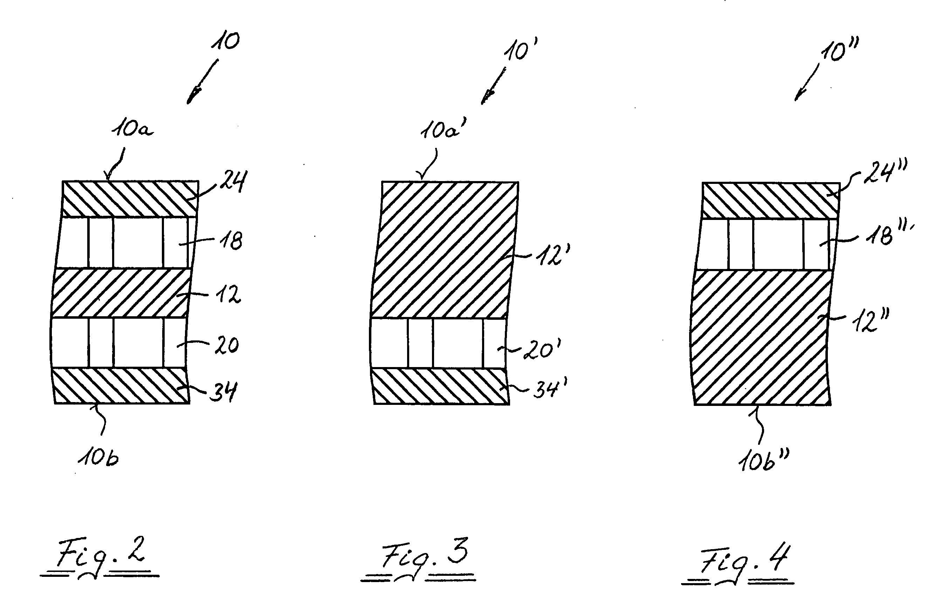

Der grundlegende Aufbau des Ausführungsbeispiels gemäß Fig. 1 ist in Fig. 2 nochmals dargestellt.

Anhand der Figuren 3 und 4 soll lediglich verdeutlicht werden, dass es grundsätzlich auch möglich ist, lediglich eine einzige Zwischenschicht vorzusehen.

So erstrckt sich infolge dieser Ausbildung bei dem Paneel 10' gemäß Fig. 3 die Verbindungsschicht 12' bis zur Dekorseite 10a', während das Paneel 10' bezüglich der Zwischenschicht 20' und der Anlageschicht 34' dem Paneel 10 gemäß Fig. 2 entspricht. In entsprechender Weise erstreckt sich bei dem Paneel 10" gemäß Fig. 4 die Verbindungsschicht 12" bis zur Anlageseite 10b" des Paneels 10", während das Paneel 10" hinsichtlich der Zwischenschicht 18" und der Dekorschicht 24" dem Paneel 10 gemäß Fig. 2 entspricht. Somit bildet die Verbindungsschicht 12' der Ausführungsform gemäß Fig. 3 einstückig auch die Trägerschicht 26 der Dekorschicht 24, und bildet die Verbindungsschicht 12" der Ausführungsform gemäß Fig. 4 einstückig auch die Trägerschicht 36 der Anlageschicht 34. Hinsichtlich der weiteren Ausbildung im Bereich der Dekorseite 10a' bzw. der Anlageseite 10b" kann auf die Ausführungen zur Ausführungsform gemäß Fig. 1 verwiesen werden.

## Patentansprüche

1. Verkleidungspaneel (10), umfassend:
- eine mit einem Dekor versehene Dekorseite (10a),
- eine zur Anlage an einem Untergrund bestimmte Anlageseite (10b), und
- eine eine Zellenstruktur aufweisende Zwischenschicht (18), welche mittelbar oder unmittelbar mit einer die Dekorseite (10a) aufweisenden Dekorschicht (24) verbunden ist oder/und welche mittelbar oder unmittelbar mit einer die Anlageseite (10b) aufweisenden Anlageschicht (34) verbunden ist,
**gekennzeichnet durch** eine aus einem Holzwerkstoff gefertigte Verbindungsschicht (12), mit welcher wenigstens ein Verbindungselement (14, 16) einer nach Art einer Nut-Feder-Verbindung ausgebildeten Verbindungsanordnung einstückig ausgebildet ist,
wobei die Zwischenschicht (18) auf der der Dekorseite (10a) zugewandten Seite der Verbindungsschicht (12) beziehungsweise auf der der Anlageseite (10b) zugewandten Seite der Verbindungsschicht (12) angeordnet ist und
wobei die Zwischenschicht (18) an den orthogonal zur Paneelebene verlaufenden Rändern (10c, 10d) des Verkleidungspaneels (10) frei liegt.

2. Verkleidungspaneel nach Anspruch 1,
**dadurch gekennzeichnet, dass** die Wandungen (18a, 20a) der Zellenstruktur der wenigstens einen Zwischenschicht (18, 20) mit Gas, vorzugsweise Luft, gefüllte Volumina (18b, 20b) umschließen.

3. Verkleidungspaneel nach Anspruch 1 oder 2,
**dadurch gekennzeichnet, dass** die Wandungen (18a, 20a) der Zellenstruktur zumindest teilweise aus einem nichtmetallischen, leichtgewichtigen Konstruktionswerkstoff gebildet sind, wobei der Konstruktionswerkstoff vorzugsweise Papier oder/und Karton oder/und Pappe ist.

4. Verkleidungspaneel nach Anspruch 3,
**dadurch gekennzeichnet, dass** der Konstruktionswerkstoff mit wenigstens einem thermoplastischen oder/und wenigstens einem duroplastischen Kunststoff imprägniert oder/und verstärkt ist, beispielsweise mit Polyolefin-Kunststoff.

5. Verkleidungspaneel nach einem der Ansprüche 1 bis 4,
**dadurch gekennzeichnet, dass** die Wandungen (18a, 20a) der Zellenstruktur im Wesentlichen orthogonal zur Paneelebene (E) verlaufen.

6. Verkleidungspaneel nach einem der Ansprüche 1 bis 5,
**dadurch gekennzeichnet, dass** wenigstens ein Teil der Zellen der Zellenstruktur einen hexagonalen Querschnitt oder einen rechteckigen, beispielsweise quadratischen, Querschnitt oder einen dreieckigen Querschnitt aufweist.

7. Verkleidungspaneel nach einem der Ansprüche 1 bis 6,
**dadurch gekennzeichnet, dass** die Verbindungsschicht (12) von einer MDF-Platte, einer HDF-Platte, einer Span-Platte, einer TischlerPlatte, einer Sperrholz-Platte oder einer Kominationsplatte, welche wenigstens eines der Materialien Span, MDF und HDF beinhaltet, gebildet ist.

8. Verkleidungspaneel nach einem der Ansprüche 1 bis 7,
**dadurch gekennzeichnet, dass** die Dekorschicht (24) eine Trägerschicht (26) und eine mit der Trägerschicht (26) verbundene Dekorlage (28) umfasst, wobei die Trägerschicht (26) vorzugsweise eine HDF-Platte umfasst, und wobei die Dekorlage (26) vorzugsweise ein Laminat umfasst.

9. Verkleidungspaneel nach einem der Ansprüche 1 bis 8,
**dadurch gekennzeichnet, dass** die Dekorseite (10a) der Dekorschicht (24) von einer mit einem Dekor bedruckten Papierlage gebildet ist.

10. Verkleidungspaneel nach einem der Ansprüche 1 bis 7,
**dadurch gekennzeichnet, dass** die Dekorschicht (24) zumindest auf ihrer Dekorseite (10a) ein Furnier umfasst.

11. Verkleidungspaneel nach einem der Ansprüche 1 bis 10,
**dadurch gekennzeichnet, dass** die Anlageschicht (34) eine HDF-Platte umfasst.

12. Verkleidungspaneel nach einem der Ansprüche 1 bis 11,
**dadurch gekennzeichnet, dass** die Anlageschicht (34) ein Dünnlaminat umfasst.

13. Verkleidungspaneel nach einem der Ansprüche 1 bis 12,
**dadurch gekennzeichnet, dass** die Anlageschicht (34) eine Trittschallfolie umfasst.

14. Verkleidungspaneel nach einem der Ansprüche 1 bis 13,
**dadurch gekennzeichnet, dass** die Anlageseite (10b) der Anlageschicht (34) von einer Gegenzugpapierlage gebildet ist.

15. Verkleidungspaneel nach einem der Ansprüche 1 bis 14,
**dadurch gekennzeichnet, dass** es eine Dicke von zwischen etwa 3 mm und etwa 40 mm aufweist.

## Claims

1. Trim panel (10), comprising:
- a decoration side (10a) provided with a decoration,
- a contact side (10b) intended for contact with a substrate and
- an intermediate layer (18) having a cell structure, which intermediate layer is connected indirectly or directly to a decoration layer (24) having the decoration side (10a), and/or which is connected indirectly or directly to a contact layer (34) having the contact side (10b),
**characterized by** a connecting layer (12) produced from a wood material, with which at least one connecting element (14, 16) of a connecting arrangement embodied in the manner of a tongue and groove connection is embodied in one piece,
wherein the intermediate layer (18) is arranged on the side of the connecting layer (12) facing towards the decoration side (10a) or on the side of the connecting layer (l2) facing towards the contact side (10b) and
wherein the intermediate layer (18) is exposed on the edges (10c, 10d) of the trim panel (10) running orthogonally to the panel plane.

2. Trim panel according to claim 1,
**characterized in that** the walls (18a, 20a) of the cell structure of the at least one intermediate layer (18, 20) surround volumes (18b, 20b) filled with gas, preferably air.

3. Trim panel according to claim 1 or 2,
**characterized in that** the walls (18a, 20a) of the cell structure are formed at least in part of a non-metallic, lightweight structural material, wherein the structural material is preferably paper and/or cardboard and/or paperboard.

4. Trim panel according to claim 3,
**characterized in that** the structural material is impregnated and/or reinforced with at least one thermoplastic material and/or at least one thermosetting plastic, for example, with polyolefin plastic.

5. Trim panel according to one of claims 1 through 4,
**characterized in that** the walls (18a, 20a) of the cell structure run essentially orthogonally to the panel plane (E).

6. Trim panel according to one of claims 1 through 5,
**characterized in that** at least a part of the cells of the cell structure has a hexagonal cross section or a rectangular, for example, square, cross section or a triangular cross section.

7. Trim panel according to one of claims 1 through 6,
**characterized in that** the connecting layer (12) is formed by an MDF board, an HDF board, a particle board, a chipboard, a plywood board or a combination board, which contains at least one of the materials of chips, MDF and HDF.

8. Trim panel according to one of claims 1 through 7,
**characterized in that** the decoration layer (24) comprises a carrier layer (26) and a decorative ply (28) connected to the carrier layer (26), wherein the carrier layer (26) preferably comprises an HDF board, and wherein the decorative ply (26) preferably comprises a laminate.

9. Trim panel according to one of claims 1 through 8,
**characterized in that** the decoration side (10a) of the decoration layer (24) is formed by a paper ply printed with a decoration.

10. Trim panel according to one of claims 1 through 7,
**characterized in that** the decoration layer (24) comprises a veneer at least on its decoration side (10a).

11. Trim panel according to one of claims 1 through 10,
**characterized in that** the contact layer (34) comprises an HDF board.

12. Trim panel according to one of claims 1 through 11,
**characterized in that** the contact layer (34) comprises a thin laminate.

13. Trim panel according to one of claims 1 through 12,
**characterized in that** the contact layer (34) comprises an impact-sound sheet.

14. Trim panel according to one of claims 1 through 13,
**characterized in that** the contact side (10b) of the contact layer (34) is formed by a counteracting paper ply.

15. Trim panel according to one of claims 1 through 14,
**characterized in that** it has a thickness of between approximately 3 mm and approximately 40 mm.

## Revendications

1. Panneau d'habillage (10), comprenant :
- un côté décor (10a) pourvu d'un décor,
- un côté d'application (10b) destiné à être appliqué sur un support, et
- une couche intermédiaire (18), présentant une structure cellulaire, qui est reliée directement ou indirectement à une couche de décor (24) présentant le côté décor (10a) et/ou qui est reliée directement ou indirectement à une couche d'application (34) présentant le côté d'application (10b),
**caractérisé par** une couche de liaison (12) réalisée à partir d'un matériau à base de bois, avec laquelle au moins un élément de liaison (14, 16), d'un agencement de liaison réalisé à la manière d'une liaison à rainure-et-languette, est réalisé d'une seule pièce,
dans lequel la couche intermédiaire (18) est agencée sur le côté de la couche de liaison (12) tourné vers le côté décor (10a) ou respectivement sur le côté de la couche de liaison (12) tourné vers le côté d'application (10b), et
dans lequel la couche intermédiaire (18) est dégagée au niveau des bordures (10c, 10d) du panneau d'habillage (10) qui s'étendent perpendiculairement au plan du panneau.

2. Panneau d'habillage selon la revendication 1,
**caractérisé en ce que** les parois (18a, 20a) de la structure cellulaire de ladite au moins une couche intermédiaire (18, 20) enferment des volumes (18b, 20b) remplis de gaz, de préférence d'air.

3. Panneau d'habillage selon la revendication 1 ou 2,
**caractérisé en ce que** les parois (18a, 20a) de la structure cellulaire sont formées au moins partiellement en un matériau de construction non métallique de poids léger, ledit matériau de construction étant de préférence du papier et/ou du carton et/ou du cartonnage.

4. Panneau d'habillage selon la revendication 3,
**caractérisé en ce que** le matériau de construction est imprégné et/ou renforcé avec au moins une matière thermoplastique et/ou au moins une matière thermodurcissable, par exemple avec une matière plastique polyoléfine.

5. Panneau d'habillage selon l'une des revendications 1 à 4,
**caractérisé en ce que** les parois (18a, 20a) de la structure cellulaire s'étendent sensiblement perpendiculairement au plan du panneau (E).

6. Panneau d'habillage selon l'une des revendications 1 à 5,
**caractérisé en ce qu'**au moins une partie des cellules de la structure cellulaire possèdent une section hexagonale ou une section rectangulaire, par exemple carrée, ou encore une section triangulaire.

7. Panneau d'habillage selon l'une des revendications 1 à 6,
**caractérisé en ce que** la couche de liaison (12) est formé par une plaque MDF (à fibres moyenne densité), une plaque HDF (à fibres haute densité), une plaque en bois aggloméré, une plaque de menuiserie, une plaque de contreplaqué ou encore une plaque combinée qui contient l'un au moins des matériaux MDF, HDF et bois aggloméré.

8. Panneau d'habillage selon l'une des revendications 1 à 7,
**caractérisé en ce que** la couche décor (24) comprend une couche porteuse (26) et une nappe de décor (28) reliée à la couche porteuse (26), ladite couche porteuse (26) comprenant de préférence une plaque HDF, et ladite nappe de décor (26) comprenant de préférence un stratifié.

9. Panneau d'habillage selon l'une des revendications 1 à 8,
**caractérisé en ce que** le côté décor (10a) de la couche de décor (24) est formé par une nappe de papier imprimée avec un décor.

10. Panneau d'habillage selon l'une des revendications 1 à 7,
**caractérisé en ce que** la couche de décor (24) comprend un placage, au moins sur son côté décor (10a).

11. Panneau d'habillage selon l'une des revendications 1 à 10,
**caractérisé en ce que** la couche d'application (34) comprend une plaque HDF.

12. Panneau d'habillage selon l'une des revendications 1 à 11,
**caractérisé en ce que** la couche d'application (34) comprend un stratifié mince.

13. Panneau d'habillage selon l'une des revendications 1 à 12,
**caractérisé en ce que** la couche d'application (34) comprend une feuille isolante vis-à-vis des bruits de contact.

14. Panneau d'habillage selon l'une des revendications 1 à 13,
**caractérisé en ce que** le côté d'application (10b) de la couche d'application (34) est formé par une nappe de papier en contre-traction.

15. Panneau d'habillage selon l'une des revendications 1 à 14,
**caractérisé en ce qu'**il possède une épaisseur entre environ 3 mm et environ 40 mm.
